# EUROPEAN PATENT SPECIFICATION

(11) **EP 1 270 299 B1**
(45) Date of publication and mention of the grant of the patent: **12.05.2004**
(21) Application number: 02013377.3
(22) Date of filing: 19.06.2002
(51) Int. Cl.: B60J 7/047, B65G 21/08, B60P 7/02, E04B 1/343

(54) **Telescopic covering**
Teleskopische Abdeckung
Couverture télescopique

(30) Priority: 28.06.2001 IT MI20011360
(43) Date of publication of application: 02.01.2003
(73) Proprietor: Sanna, Ignazio, 09134 Pirri (Cagliari) (IT)
(72) Inventor: Sanna, Ignazio, 09134 Pirri (Cagliari) (IT)
(74) Representative: Petruzziello, Aldo

(56) References cited:
- FR-A- 2 555 219
- US-A- 4 974 898
- US-A- 5 203 603
- PATENT ABSTRACTS OF JAPAN vol. 017, no. 222 (M-1404), 7 May 1993 (1993-05-07) -& JP 04 354712 A (UBE IND LTD), 9 December 1992 (1992-12-09)

## Description

The invention refers to movable coverings for areas, such as swimming pools, tennis courts, vehicle or trailer bodies, sheds, and so on, which coverings are designed to be extensible, so as to cover or insulate the area and protect it from inclement weather, low temperature etc., and retractable, when the area is to be left uncovered.

The prior art closest to the invention is represented by retractable coverings comprised of several covering elements of different transversal dimensions, so that each subsequent element can be contained into a preceding element, in a retracted condition. This type of covering requires for each element's overall transversal dimensions to be smaller than the internal free transversal surface of the adjacent element; therefore, the feet of each subsequent element are required to slide in between the feet of the previous adjacent element.

This involves the need to arrange a number of slide tracks equal to the number of sliding elements of the covering along each longitudinal side of the covering (i.e. along each side parallel to the sliding direction when the elements are extending or retracting).

When the number of covering elements is significant, these slide tracks - generally in the form of rails - placed side by side, take up a considerable amount of space on the ground; moreover, this limits the use of these coverings to designs where the tracks can be laid on the ground, as it would be unthinkable to install very wide sliding areas on a wall. Another disadvantage is the fact that the transversal dimensions of the smallest covering element must be those of the area to be covered, while the largest covering element, having to contain all the others, may be considerably larger. A further disadvantage is the fact that, when extended, the shape of the covering is necessarily sloping: narrower and lower at one end, wider and taller at the other.

JP 04 354712 discloses a covering device where overlapping elements are sliding on slide tracks realised through grooved rollers, groups of adjacent wheels, groups of superimposed tracks or pairs of opposite C-shaped tracks.

When the slide tracks are realised through groups of superimposed tracks or through pairs of opposite C-shaped tracks, JP 04 354712 further provides that each overlapping element includes a pair of front feet and a pair of back feet sliding in engagement with the slide tracks; if opposite C-shaped tracks are used, the pair of front feet has a transverse distance which is different than that between the pair of back feet.

An aim of the invention is to obviate the disadvantages of traditional coverings described above, and in particular to provide a retractable or telescopic covering which will look substantially homogeneous throughout its longitudinal direction when extended, will require a limited number of tracks, and therefore limited transversal space to install them, regardless of the number of covering elements, and which may be retracted to occupy relatively little space.

A further aim is to provide a functional covering, which may be manufactured and handled in a cost-effective manner.

These aims have been achieved by a covering as said in Claim 1. Further desirable and useful characteristics of said covering are said in the dependent claims.

In other words, the new covering includes a fixed structure with a pair of parallel tracks on each longitudinal side and a number of substantially identical collaborating covering elements. Each covering element includes, on each longitudinal side, a pair of front feet and a pair of back feet designed to slide along said parallel slide tracks, which are common to all covering elements. At the end thereof, the tracks have stretches slanting upward or downward, parallel to each other and spaced at a distance proportionate to the length of each individual element.

Power-driven or manual means can be used to move the opening to the extended or retracted condition, and gaskets to seal the elements together.

The new covering achieves the aims said above, and in particular it can be made to have a same width and shape throughout its entire length, it can include a number of identical covering elements, and it can be designed to cover also very large areas; the space required for the side rails is limited; the covering is easy to handle; it can be designed to run along rails installed on walls and not only on the ground; the investment and maintenance costs it involves are reasonable, and in any case not exceeding those required for traditional retractable coverings. Additionally, as the covering elements are identical to each other, they can be manufactured in series. The size of each individual element depends only on the transversal dimensions of the area to be covered, and in any case would not be larger than the smallest element of the above said prior art covering.

Further, as the elements of a covering are alike, mass production of same can be provided. Further, the dimensions of each single element is in terms of the cross size of the area to be covered only, and in any case wouldn't be larger that the smallest element of the above said prior art covering.

Exemplary unrestrictive embodiments of the invention will be described in the following, with reference to the figures attached, where:
Figure 1 is a perspective top view, in reduced scale, of a first embodiment of covering according to the invention,
Figure 2 is a perspective view similar to the previous one, illustrating the same covering in a retracted position,
Figure 3 is a perspective view from above, in larger scale, of an individual element of the covering,
Figure 4 is a longitudinal cross-sectional view, in reduced scale but larger than Figure 2, of the covering in the retracted position,
Figure 4a illustrates a detail of the covering's actuator device,
Figure 5 is a cut-off front view of the slide feet on one side of a covering element, and their positioning on the tracks,
Figure 6 is a longitudinal cross-sectional view of the seal between two consecutive covering elements,
Figure 7 is a reduced scale perspective view of a second covering of the invention, in an extended position,
Figure 8 is a perspective view of the second covering, in a retracted position, drawn in a different scale with respect to the previous figure;
Figure 9 is a perspective view of one element of the second covering;
Figures 10, 11, 12 diagrammatically show an example of coupling of a front covering element and a back covering element; in particular, the figures are broken-away longitudinal cross-sectional views of the covering,
Figure 13 is a perspective view of a covering element to create, e.g., a shed;
Figures 14 and 15 are respectively a side view of a covering with elements like the one illustrated in Figure 13, in a retracted position, and a longitudinal cross-sectional view of the same covering in an extended position.

With reference to the figures, a reference number 10 is used to indicate an overall retractable covering according to the invention; the covering includes a number of substantially identical covering elements 12, and a slide track 14, respectively 16, on each side; each track in this exemplary embodiment is made up of a rail with two runways.

For ease of understanding, the term longitudinal indicates the direction defined by the tracks; the term transversal indicates the direction perpendicular to the longitudinal direction; right and left indicate the items shown on the right and left of the various figures; "front element" is the foremost or leading element, and "back element" is the rear or trailing element. Additionally, 12 is a covering element described in generic terms; with respect to their position, 12a is the foremost or most downstream covering element, 12b the covering element in second position, and so on, and the components of each element are identified by the letter indicating the element.

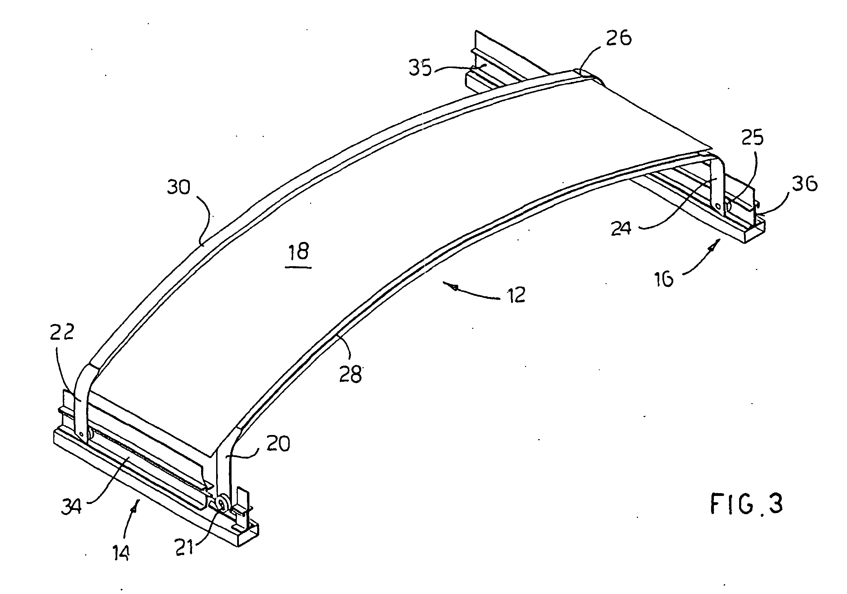

As shown more in detail in Figure 3, each covering element 12 includes a covering panel 18, and four movement legs, two on each side, referenced 20, 22, 24, 26 respectively. In the embodiment of this figure, the panel 18 is shaped as an arch in front view, but it could also have a different configuration, and its structure is stiffened by a front transverse rib 28 and a back transversal rib 30. In the embodiment of Figure 3 the front rib 28 protrudes downwards, the back rib 30 protrudes upwards.

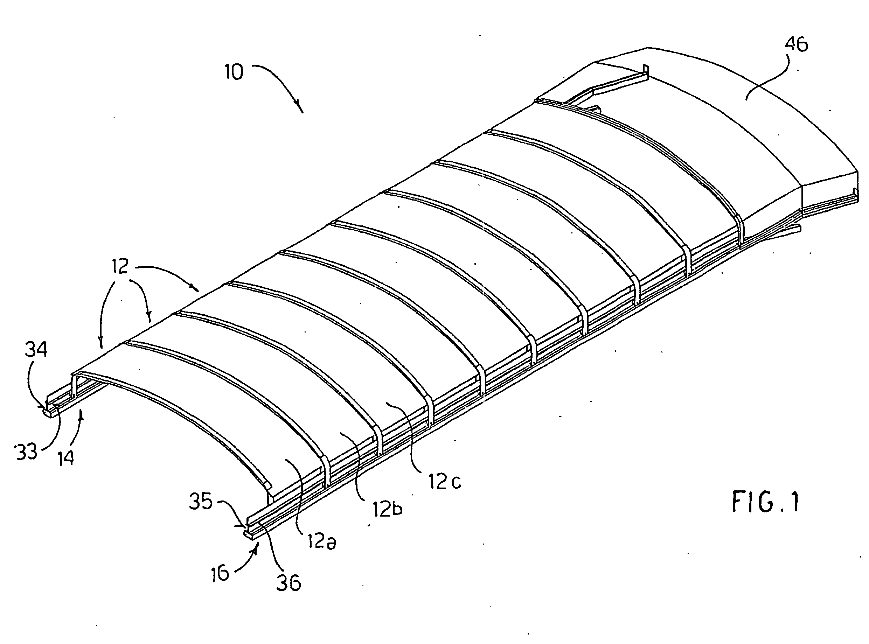

Each movement leg includes a vertical rod and a foot, generally consisting of one or more wheels or rollers, for engaging runways of the respective track 14 or 16. In the embodiment shown in figures 1 to 6, each covering element has the front legs 20, 24 located at a smaller transversal distance than the back legs 22, 26, and inner legs 20,24 have their respective wheels or rollers 21, 25 on the outer side, while the outer back legs 22, 26 have their respective wheels or rollers 23, 27 on the side looking inwards. The wheels may also be installed on the side facing inwards or outwards in inside or outside legs respectively, or even all inside or all outside.

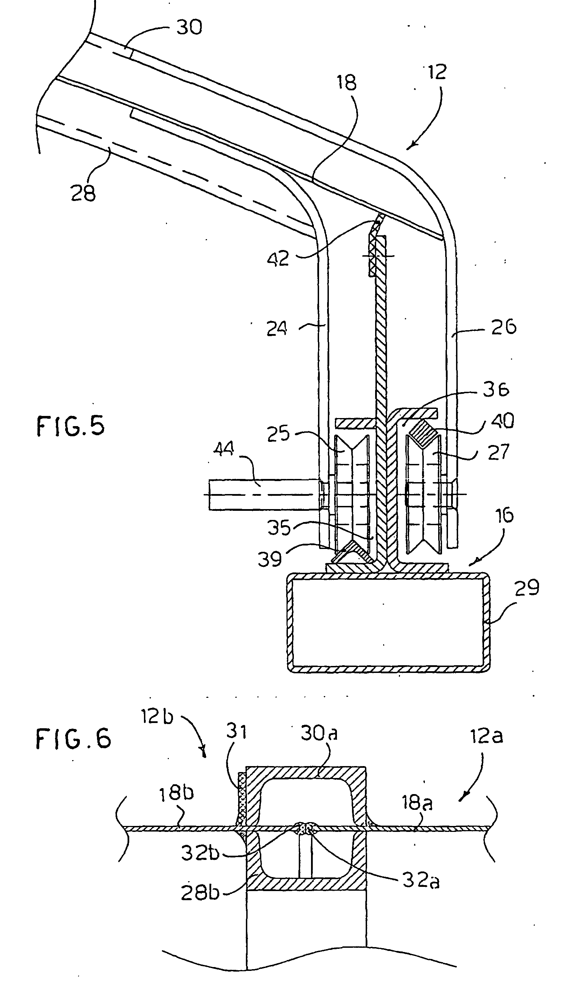

Each rib will be preferably made of a C section, tightly fastened (welded, wedged, or bolted) onto the respective side of a covering element panel, as shown in greater detail in Figure 6; the section may be equipped with a seal 31. In particular, Figure 6 illustrates two covering elements 12a (front or downstream element), 12b (back or upstream element), coupled together in the extended position, with the back rib 30a of the front element 12a over the front rib 28b of the back or rear element 12b. The facing end edges of panels 18a of the front element and 18b of the back element are also preferably equipped with collaborating seals 32a, 32b. In the first (front) element 12a the front rib may also be protruding upwards as in the back element.

The ribs may consist of a trelliswork, box-type structure, or other type of structure.

As shown in fig. 3 and in greater detail in Figure 5, each rail 14, 16, includes two runways, an inner runway 33 and an outer runway 34 for rail 14; an inner runway 35 and an outer runway 36 for rail 16. Each runway can include, for example, an L section or C section as references 37, 38 shown in Figure 5, both fastened onto a base element 29, and a further support section 39 for the inner runway and 40 for the outer runway. Section 39 will preferably hold roller 25 from below, while section 40 will hold roller 27 from above.

Rail 14, respectively 16, may also serve as side wall, in which case it can have any vertical extension correlated to the size of the covering element's legs), and may be equipped on the top with a seal 42 for contact with panel 18 of the covering element.

A maneuvering stake 44 will preferably be attached to one or both the inner legs, e.g. 24, or to another part of the covering element.

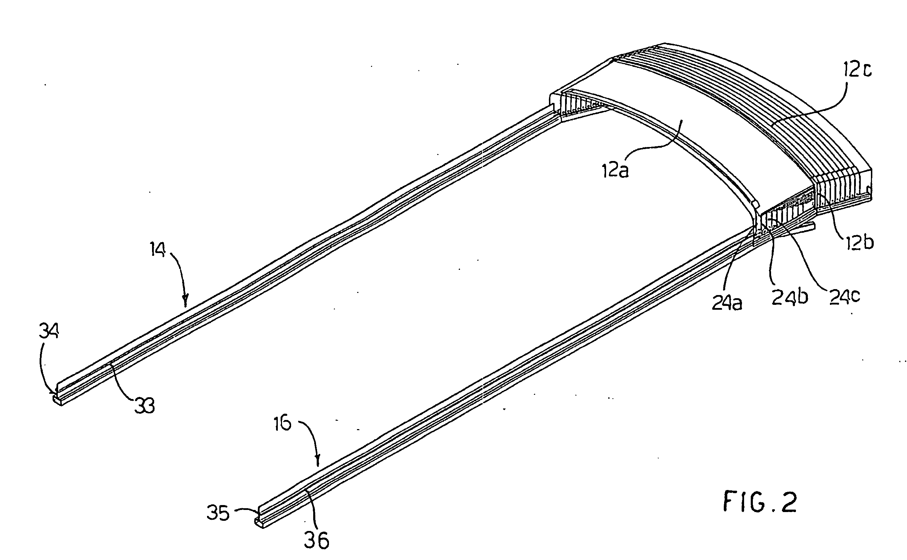

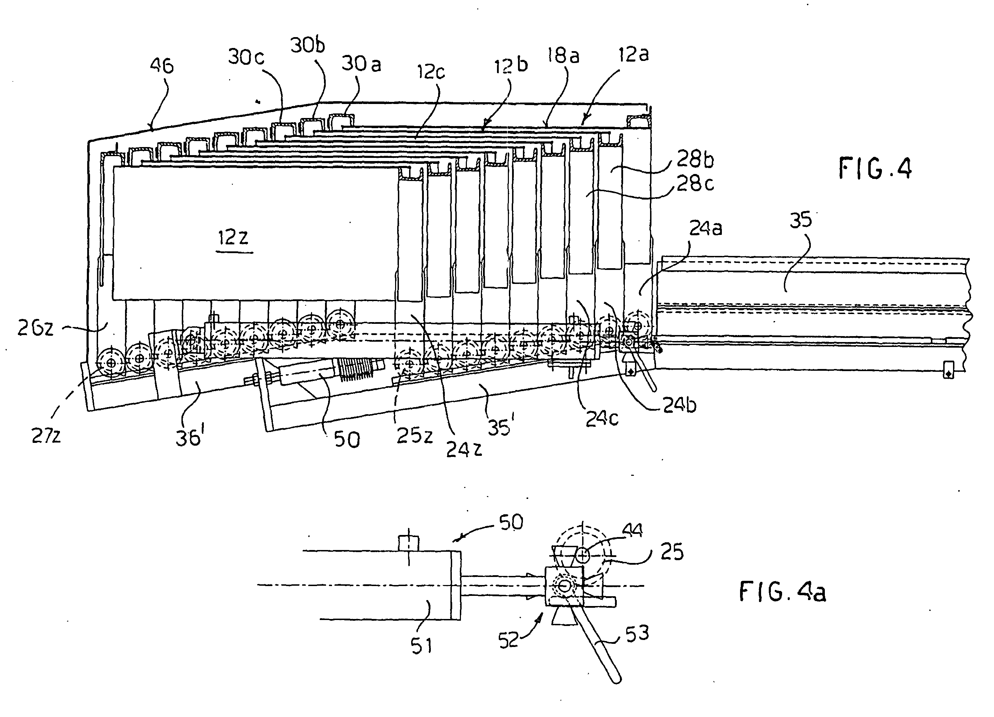

The back ends of rails 14, 16, shown on the right in Figure 1 and Figure 2, and on the left in Figure 4, have end portions 33', 34', 35', 36' of their respective runways sloping downwards, parallel to each other and longitudinally offset, generally for the length of one covering element. The sloping angle may depend on the thickness of the covering element and on the amount of clearance desired between two adjacent elements.

A fixed housing 46, at the back end of the rails, can be installed to house and protect the covering when in the retracted position.

An actuator device 50, shown in Figures 4 and 4a, may be used to extend and/or retract the retractable covering. Actuator device 50 will preferably include a cylinder-piston assembly 51, attached to a fixed structure at one end; the extensible element of this assembly, for example the stem, will have a rotating crosshead or star shaped head 52, positionable in 4 positions, and is equipped with a maneuvering lever 53. The cross head 52 is designed to engage an element's stakes 44.

The covering's operation is described below.

When the covering is in the retracted position, as shown in Figures 2 and 4, the elements' roller feet occupy the rails' sloping end portions, or collecting portions; in particular, proximal covering element 12z has its feet 27z, 25z in the lower position, particularly the back or upstream feet (only 27z is visible) on the outer sloping ends 34' and 36', and its front or downstream feet (only 25z is visible) on the inner sloping ends 33' and 35'. The covering element immediately downstream of 12z, referenced 12v, is positioned with its covering panel 18v overlapping the covering panel 18z of element 12z, and with its front and back legs on the sloping portions and ramps, adjacent to the back and front legs respectively of element 12z, and therefore at a higher level. This is made possible by the fact that the back and front legs of each covering element are at a different transversal distance - in particular, the distance between the back legs is greater, so that they can reach past the front legs of the other elements - and by the fact that the front ribs protrude downwards, or rather do not protrude upwards.

To extend the covering from its retracted position shown in Figures 2 and 4, it is possible to operate manually, pushing or pulling the covering elements towards the right in Figure 4. However, it is preferable to use the actuator 50 with a crosshead 52, which is rotated by means of lever 53, so as to act by push or pull force on a stake 44 with which it is engaged. The head is engaged first with stake 44a of covering element 12a downstream, and subsequently with stake 44b of adjacent covering element 12b immediately upstream of 12a, and so forth.

Each covering element is slid with its feet in rails 14, 16, to the desired position, where, if desired, it can be blocked in place with means not shown, as said means are in the reach of a person skilled in the art.

The covering's extended position is shown in Figure 1. Figure 6 shows the particular of the sealing between adjacent covering panels in the extended position. In particular, the sealing between a downstream panel 18a and the panel immediately upstream 18 b is ensured by contact between the end seals 32a, 32b inside the casing formed by the ribs 30a of the downstream element and 28b of the upstream element, and by engagement of sheet seal 31 onto panel 18b.

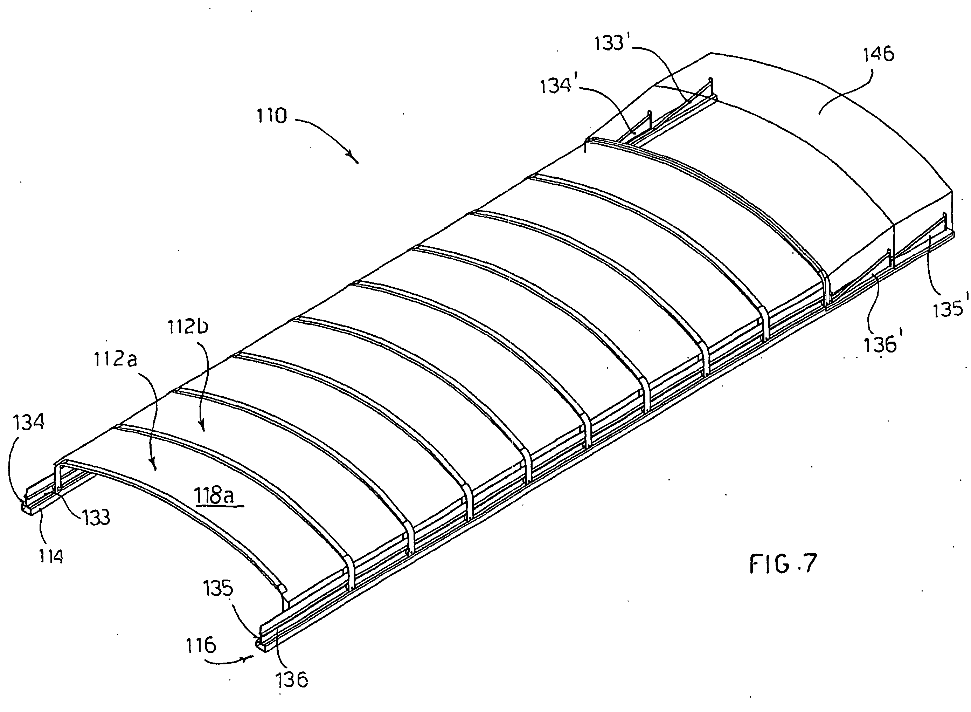

Figures 7, 8, 9 show a variant of the covering of the invention, referenced 110. The elements of covering 110 corresponding to those of covering 10 are indicated with the same reference numbers increased by 100, and will not be described in detail unless strictly necessary.

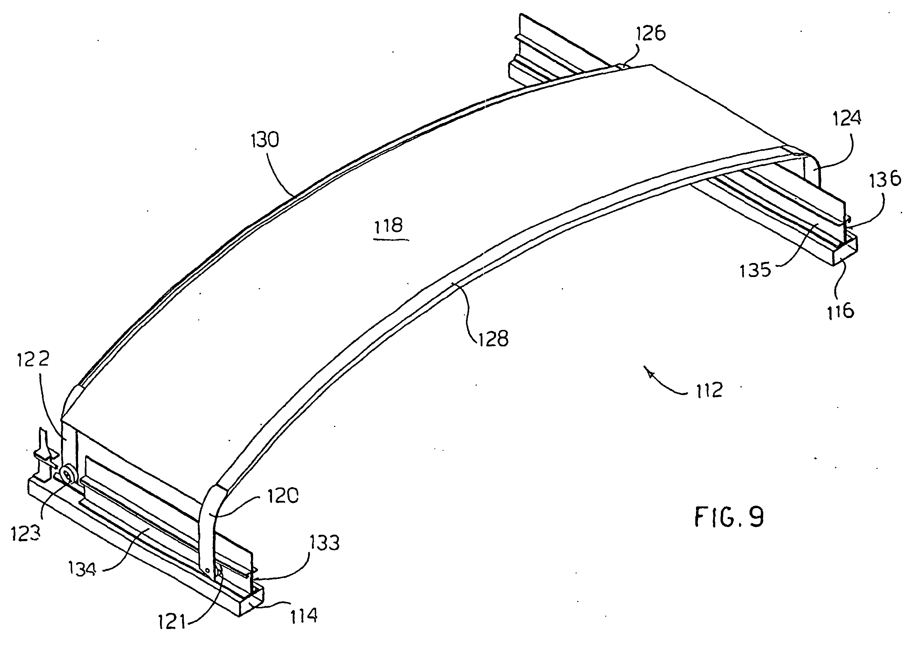

Covering 110 includes a number of covering elements 112, one of which is illustrated in Figure 9, and which are indicated with 112a, 112b etc., starting from the downstream end of the covering.

Element 112 includes a covering panel 118 with a stiffening rib on the downstream side, indicated with 128, protruding upwards, and a stiffening rib 130 on the upstream side, protruding downwards or in any case at a lower level than rib 128. The transversal distance between front legs 120, 124 of the element is greater than the maximum transversal distance between back legs 122, 126. The element legs on the left side in Figure 9 run on a rail 114, element front foot 121 engages on an outer runway 134, and back foot 123 engages on an inner runway 133. The legs on the right side of the same figure run on a rail 116, which is engaged by the front foot (not visible) on an outer runway 136 and by the back foot (not visible) on an inner runway 135.

The runways of each rail 114, 116 have their upstream end portions, referenced 133', 134', 135', 136' respectively, deflected upwards, parallel and distanced.

A fixed casing over the upstream sloping ends of the rails is indicated by 146.

In the extended position, the covering 110 has each front rib of an upstream element overlapping the back rib of the adjacent downstream element.

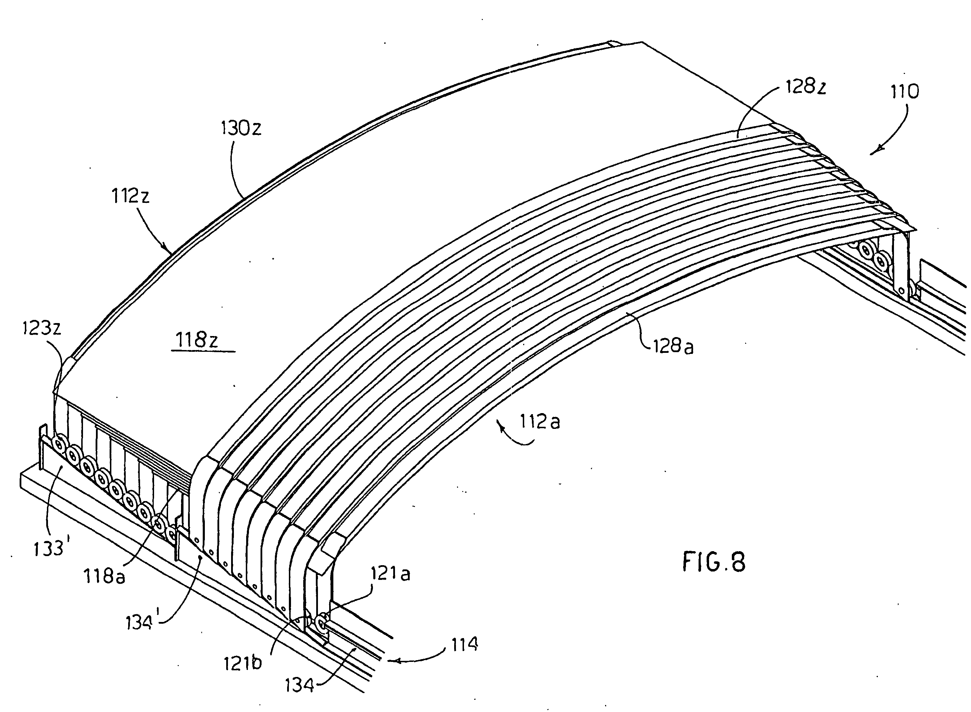

In the retracted position, as shown in Figure 8, the covering has its elements 112 arranged with their pannels one below the other, with the most upstream panel 118z in the highest position and the most downstream panel 118a in the lowest position, with the inner back feet 123, 127 on portions 133', 135' and the front feet on outer portions 134', 136'.

Covering 110 can be operated manually or by means of an actuator, as described above for covering 10.

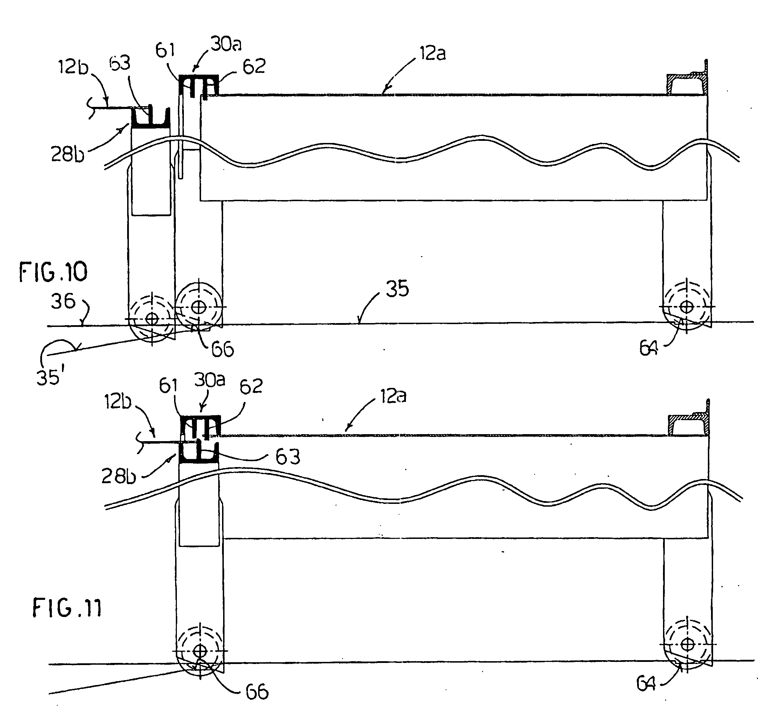

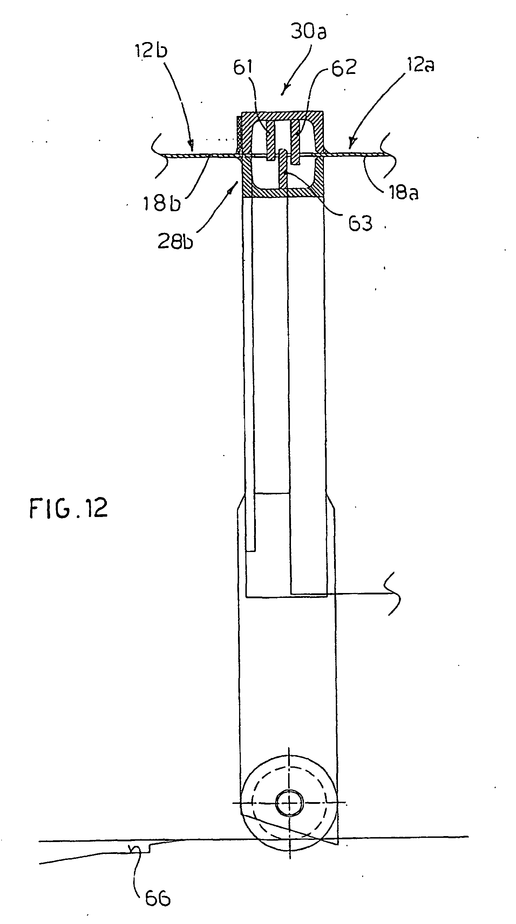

When in the extended position, covering elements 12 can be left loose, or preferably locked to each other, to facilitate the extraction/retraction of all the elements together. With reference to Figures 10, 11, 12, the following is a description of an automatic fastening/unfastening system for a covering as shown in Figures 1 to 6. Possible solutions are exemplified by, but not limited to, the description below.

At least in some points of its transversal length, the back rib 30a of front element 12a is equipped with tabs 61, 62, protruding downwards; tab 61 is slightly shorter than tab 62. At a location corresponding to tabs 61, 62, the front rib 28b of back element 12b is equipped with one or more tabs 63 extending upwards. The runways for the front rollers (only 35, 35' is visible) and back rollers (only 36, is visible) are equipped with a means to temporarily stop the covering element during movement; such means may be, for example, trough 64 on runways 33, 35 for the front wheels, and said runways have a specially shaped profile 66 on the runways for the front wheels, including a step at the end of each sloping ramp 33', 35'. When the front wheels of front element 12a being extracted reach troughs 64, the element stops temporarily; at this point covering element 12b engages step 66, locates its front rib 28b beneath the back rib 30a of element 12a, and advancing further past step or profile 66, places itself with the front rollers at the level of rear rollers of the first covering element, and inserts its tab 63 between tabs 61, 62 of element 12a. With each subsequent movement, towards the right in Figures 10 to 12, elements 12a and 12b will advance together.

Retraction of the covering elements will also take place at first with the elements moving together.

During retraction, the sequence for unlocking the elements will be the reverse of the one described for their extraction.

The tabs could be arranged differently, for example there could be a single central tab on the back rib of the front element, and two side tabs on the front rib of the back element.

It should be noted that, although the examples describe rails for sliding of the roller feet of the covering elements, it is not necessary for such feet to roll on special rails, but they could also run on any adequately smooth surface, provided that the sloping collecting portions are provided.

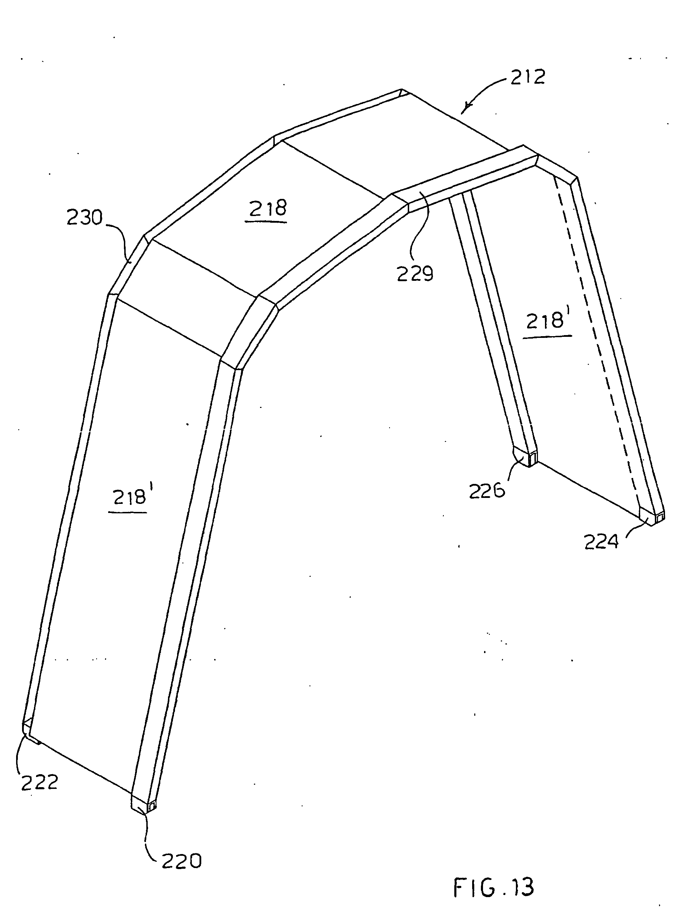

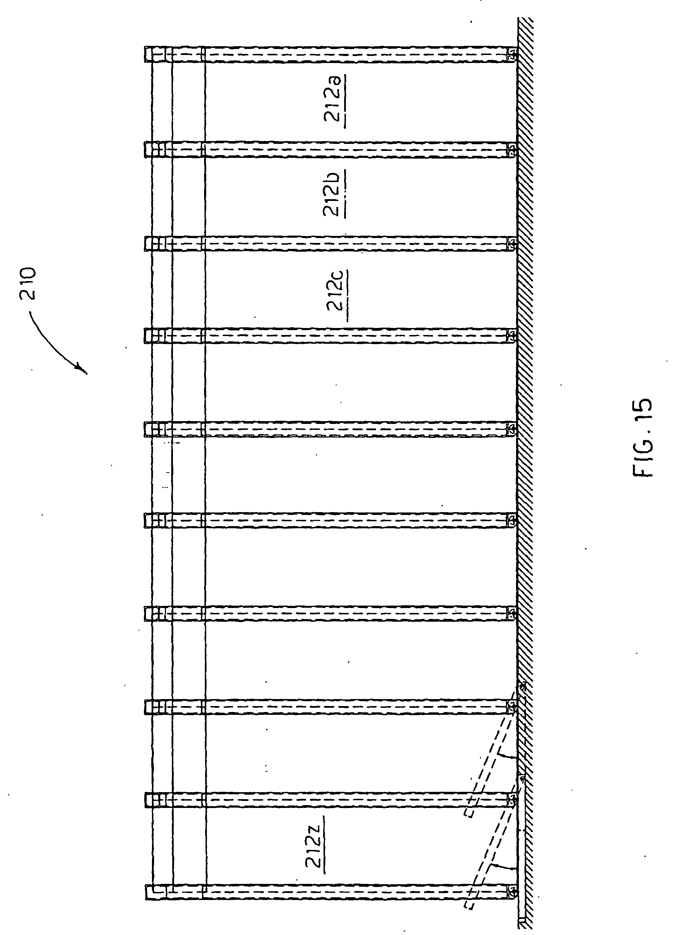

With reference to Figures 13, 14 and 15, an embodiment of the covering, referenced 210, will be described in the following; said embodiment is particularly suitable to create sheds and temporary buildings in general. The special shape of an individual covering element 212 is shown in Figure 13. The element includes a panel 218 with the top extended to form a part of the roof, and the sides extended to form parts of a preferably slightly sloping wall 218', ending in feet 220, 222, 224, 226, with or without rollers. Reference 229 is an upstream rib, reference 230 is a downstream rib; the same description as the one provided for other embodiments applies to these ribs. In its extended position, covering 210 appears as shown in Figure 15: as can be seen, this covering forms not only a portion of roof to cover an area, but also side walls, so that it can be used to make sheds for construction sites and the like.

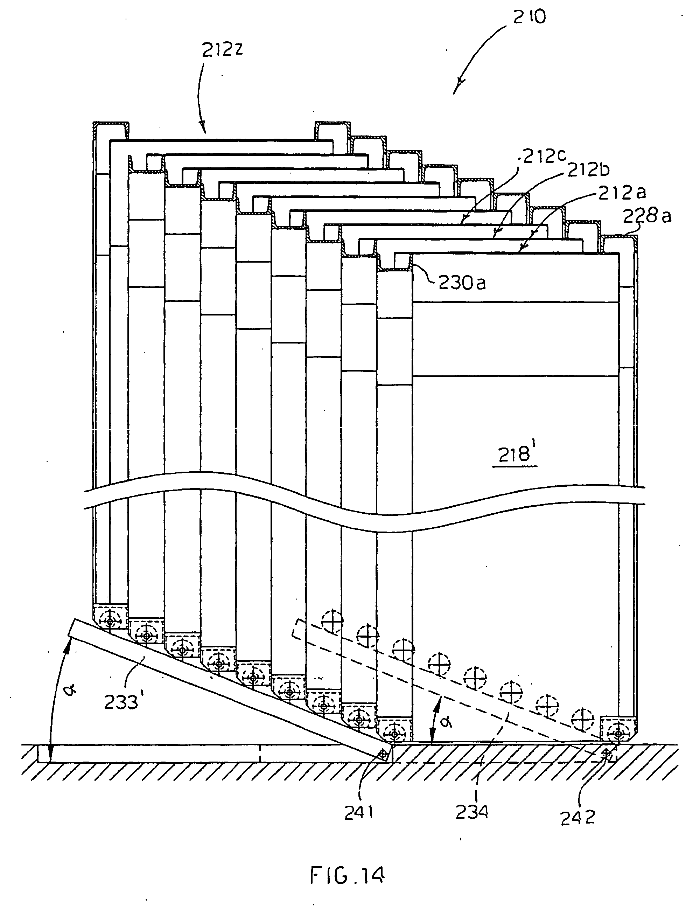

Figure 14 also shows a possible variant of slide tracks for a structure's feet. In this case, the slide tracks include rail end parts 233' and 234' respectively, hinged in 241, 242 respectively, so that they can be rotated at an angle α to house the covering in the retracted or compact position, as shown in Figure 14, or they can be lowered to a position in line with the remaining part of the slide tracks, Figure 15, when the covering is extended.

Any variations or modifications to the descriptions above, in the reach of a person skilled in the art, will fall within the scope of this invention as defined in the claims attached hereto.

## Claims

1. A telescopic covering for areas, including a number of covering elements (12a, b; 112a, b), movable along longitudinal side slide tracks (14, 16; 114, 116), from an extended position in which they cover the area to a retracted position in which they occupy a reduced amount of space and vice versa, the covering elements (12a,b; 112a,b) including a pair of front feet (21, 25) and a pair of back feet (22, 26) in engagement with longitudinal side slide tracks (14, 16; 114, 116), the pair of front feet (21, 25) having a transverse distance which is different than the overall transversal distance between the pair of back feet (22, 26), **characterized in that**:
- said covering elements (12a, b; 112a, b) are identical to each other;
- said longitudinal side slide tracks (14, 16; 114, 116), common to all said covering elements (12a, b; 112a, b), are a pair of parallel slide tracks on each longitudinal side;
- each slide track (14, 16; 114, 116) includes an inner runway (33, 35; 133, 135) and an outer runway (34, 36; 134, 136) realised on the opposite sides of the side track (14, 16; 114, 116),
- said runways (33, 35 133, 135; 34, 36, 134, 136) have upstream portions thereof which are sloping and spaced on the same side, so that the identical covering elements (12a, b; 112a, b) may be arranged next to each other and overlapping in the retracted position.

2. Covering according to claim 1, in which the slide tracks (14, 16; 114, 116) include rails.

3. Covering according to claim 1, **characterized in that** each covering element (12a, b; 112a, b) includes a covering panel (18,118) and legs (20, 22, 24, 25) attached to the panel on each side, and said legs include one foot each running in its respective runway.

4. Covering according to claim 3, **characterized in that** each covering element (12a, b; 112a, b) further has an upstream rib (30, 130) and a downstream rib (28, 128), and one of said ribs (30, 130, 28, 128) has an overall size suitable for it to slide beneath the other rib of an adjacent panel.

5. Covering according to claim 3, **characterized in that** it includes sealing means on the covering elements (12a, b; 112a, b) in order to have a sealed engagement of adjacent covering elements (12a, b; 112a, b).

6. Covering according to claim 3, **characterized in that** the covering elements (212) include a roof portion and extended side portions to form walls, equipped with said slide feet.

7. Covering according to claim 1, **characterized in that** it includes an actuator device (50) including a movable stem and a star-shaped engaging device that can be rotated into an engaging or a disengaging position, and **in that** each panel includes at least one stake (44) designed to be engaged by such engaging device.

8. Covering according to claim 1, **characterized in that** it includes locking devices (61, 62) on the back portion of each covering elements (12a, b; 112a, b) and complementary locking devices (63) on the front portion of each covering panel to allow for a combined back and forth movement of all the covering elements (12a,b; 112a,b) together.

9. Covering according to claim 8, **characterized in that** said locking devices include pairs of tabs (61, 62) attached to a front covering element, one tab (63) attached to a back covering element in correspondence with each said pair of tabs of the front covering element and steps (64, 66) on the runways for the front wheels and for the back wheels.

## Patentansprüche

1. Eine teleskopische Abdeckung für Flächen, die eine Anzahl von Abdeckungselementen (12a, b; 112a, b) umfasst, die entlang seitlicher Längsgleitführungen (14, 16; 114, 116) bewegt werden können, und zwar von einer ausgestreckten Stellung, in der sie die Fläche bedecken, zu einer eingezogenen Stellung, in der sie einen geringeren Raum einnehmen und umgekehrt, wobei die abdeckenden Elemente (12a, b; 112a, b) ein Paar vorderer Füße (21, 25) und ein Paar hinterer Füße (22, 26) umfassen, die in die Längsgleitführungen (14, 16; 114, 116) einrasten, wobei das Paar vorderer Füße (21, 25) einen Querabstand aufweist, der vom Gesamtquerabstand zwischen dem Paar hinterer Füße (22, 26) abweicht, **dadurch gekennzeichnet, dass**:
- die genannten Abdeckungselemente (12a, b; 112a, b) miteinander identisch sind;
- die genannten Längsgleitführungen (14, 16; 114, 116), die allen genannten Abdeckungselementen (12a, b; 112b, b) gemeinsam sind, ein Paar paralleler Gleitführungen an jeder Längsseite sind;
- jede Gleitführung (14, 16; 114, 116) jeweils eine innere Rollbahn (33, 35; 133, 135) und eine äußere Rollbahn (34, 36; 134, 136) umfasst, die an den gegenüberliegenden Seiten der Gleitführung (14, 16; 114, 116) liegen,
- die genannten Rollbahnen (33, 35, 133, 135; 34, 36, 134, 136) stromaufwärts Abschnitte davon aufweisen, die an einer selben Seite geneigt und auseinandergelegt sind, so dass die identischen Abdeckungselemente (12a, b; 112a, b) in der eingezogenen Stellung aneinander liegend und einander überdeckend angeordnet werden können.

2. Eine Abdeckung gemäß Anspruch 1, bei der die Gleitführung (14, 16; 114, 116) Schienen umfassen.

3. Eine Abdeckung gemäß Anspruch 1, **dadurch gekennzeichnet, dass** jedes Abdeckungselement (12a, b; 112a, b) eine Abdeckungsplatte (18, 118) und Beine (20, 22, 24, 25) umfasst, die an jeder Seite an der Platte befestigt sind, sowie dadurch, dass die genannten Beine jeweils einen Fuß umfassen, der in seiner entsprechenden Rollbahn läuft.

4. Eine Abdeckung gemäß Anspruch 3, **dadurch gekennzeichnet, dass** jedes Abdeckelement (12a, b; 112a, b) des weiteren stromaufwärts eine Verrippung (30, 130) und stromabwärts eine Verrippung (28, 128) aufweist, sowie dadurch, dass eine der genannten Verrippungen (30, 130, 28, 128) ein Gesamtaußenmaß aufweist, das in der Lage ist, unter der anderen Verrippung einer anliegenden Platte zu verlaufen.

5. Eine Abdeckung gemäß Anspruch 3, **dadurch gekennzeichnet, dass** sie Abdichtungsmittel an den Abdeckungselementen (12a, b; 112a, b) umfasst, um eine entsprechend dichte Einrastung der anliegenden Abdeckungselemente (12a, b; 112a, b) zu erzielen.

6. Eine Abdeckung gemäß Anspruch 3, **dadurch gekennzeichnet, dass** die Abdeckungselemente (212) einen Dachabschnitt und zur Bildung von Wänden ausgestreckte Seitenabschnitte umfassen, die jeweils mit den genannten Gleitfüßen ausgerüstet sind.

7. Eine Abdeckung gemäß Anspruch 1, **dadurch gekennzeichnet, dass** sie eine Antriebsvorrichtung (50) umfasst, die einen beweglichen Schaft und eine sternförmige Einrastvorrichtung einschließt, welche in eine einrastende oder ausrastende Stellung gedreht werden kann, sowie dadurch, dass jede Platte mindestens einen Pfosten (44) umfasst, der dazu bestimmt ist, durch diese Einrastvorrichtungen eingerückt zu werden.

8. Eine Abdeckung gemäß Anspruch 1, **dadurch gekennzeichnet, dass** sie Verriegelungsvorrichtungen (61, 62) am hinteren Abschnitt jedes Abdeckungselements (12a, b; 112a, b) und zusätzliche Verriegelungsvorrichtungen (63) am vorderen Abschnitt jeder Abdeckplatte umfasst, um jeweils eine kombinierte Vorwärts- und Rückwärtsbewegung aller Abdeckungselemente (12a, b; 112a, b) zusammen zu gestatten.

9. Eine Abdeckung gemäß Anspruch 8, **dadurch gekennzeichnet, dass** die genannten Verriegelungselemente Paare von Rippen (61, 62) aufweisen, die jeweils an einem vorderen Abdeckungselement befestigt sind, eine Rippe (63), die an einem hinteren Abdeckungselement jeweils in Übereinstimmung mit jedem genannten Paar Rippen der vorderen Abdeckungselemente befestigt ist und Stufen (64, 66) auf der Rollbahn für die vorderen Räder und die hinteren Räder.

## Revendications

1. Couverture télescopique pour zones, comprenant un nombre d'éléments de couverture (12a, b; 112a, b), mobiles le long des pistes de coulissement latérales longitudinales (14, 16; 114, 116) à partir d'une position d'extension dans laquelle ils couvrent la zone à une position de rétraction dans laquelle ils occupent un espace réduit et vice-versa, les éléments de couverture (12a, b; 112a, b) comprenant une paire de pieds placés dans la partie avant (21, 25) et une paire de pieds placés dans la partie arrière (22, 26) en engagement avec les pistes de coulissement latérales longitudinales (14, 16; 114, 116), la paire de pieds placés dans la partie avant (21, 25) ayant une distance transversale qui est différente de la distance transversale globale entre la paire de pieds placés dans la partie arrière (22, 26), **caractérisée en ce que** :
- lesdits éléments de couverture (12a, b; 112a, b) sont identiques;
- lesdites pistes de coulissement latérales longitudinales (14, 16; 114, 116), communes à tous lesdits éléments de couverture (12a, b; 112a, b), sont une paire de pistes de coulissement parallèles sur chaque côté longitudinal;
- chaque piste de coulissement (14, 16; 114, 116) comprend un chemin de course intérieur (33, 35; 133, 135) et un chemin de course extérieur (34, 36; 134, 136) réalisés sur les côtés opposés de la piste de coulissement (14, 16; 114, 116),
- lesdits chemins de course (33, 35; 133, 135; 34, 36; 134, 136) présentent des parties en amont de ceux-ci qui sont inclinées et espacées sur le même côté, de sorte que les éléments de couverture identiques (12a, b; 112a, b) puissent se placer dans une condition rapprochée les uns des autres et en superposition dans la position de rétraction.

2. Couverture selon la revendication 1, où les pistes de coulissement (14, 16; 114, 116) comprennent des rails.

3. Couverture selon la revendication 1, **caractérisée en ce que** chaque élément de couverture (12a, b; 112a, b) comprend un panneau de couverture (18, 118) et des jambes (20, 22, 24, 25) fixées au panneau sur chaque côté, et lesdites jambes comprennent chacune un pied dans leur chemin de course respectif.

4. Couverture selon la revendication 3, **caractérisée en ce que** chaque élément de couverture (12a, b; 112a, b) possède également une côte en amont (30, 130) et une côte en aval (28, 128), et une desdites côtes (30, 130, 28, 128) a un encombrement global lui permettant de coulisser sous l'autre côte d'un panneau adjacent.

5. Couverture selon la revendication 3, **caractérisée en ce qu'**elle comprend des moyens d'étanchéité sur les éléments de couverture (12a, b; 112a, b) de manière à obtenir un engagement étanche des éléments de couverture adjacents (12a, b; 112a, b).

6. Couverture selon la revendication 3, **caractérisée en ce que** les éléments de couverture (212) comprennent une partie en toit et des parties latérales étendues pour former des parois, équipées desdits pieds de coulissement.

7. Couverture selon la revendication 1, **caractérisée en ce qu'**elle comprend un dispositif d'actionnement (50) comprenant une tige mobile et un dispositif d'engagement en forme d'étoile qui peut tourner dans une position d'engagement ou une position de désengagement, et **en ce que** chaque panneau comprend au moins un pieu (44) prévu pour s'engager au moyen dudit dispositif d'engagement.

8. Couverture selon la revendication 1, **caractérisée en ce qu'**elle comprend des dispositifs d'attache (61, 62) sur la partie arrière de chaque élément de couverture (12a, b; 112a, b) et des dispositifs d'attache complémentaires (63) sur la partie avant de chaque panneau de couverture afin de permettre un mouvement d'avancement et un mouvement de retrait associés entre eux de tous les éléments de couverture (12a, b; 112a, b) ensemble.

9. Couverture selon la revendication 8, **caractérisée en ce que** lesdits dispositifs d'attache comprennent des paires d'ailettes (61, 62) fixées à un élément de couverture avant, une ailette (63) fixée à un élément de couverture arrière au niveau de chacune desdites paires d'ailettes de l'élément de couverture avant et des dispositifs à marche (64, 66) sur les chemins de course pour les roues avant et pour les roues arrière.
